# EUROPEAN PATENT APPLICATION

(11) **EP 1 760 660 A2**
(43) Date of publication of application: **07.03.2007**
(21) Application number: 05258022.2
(22) Date of filing: 23.12.2005
(51) Int. Cl.: G06T 5/40

(54) **Image processor**

(30) Priority: 29.08.2005 JP 2005248270
(71) Applicant: Fujitsu Ltd., Kawasaki-shi, Kanagawa 211-8588 (JP)
(72) Inventor: Okada, Masaki, c/o Fujitsu VLSI Limited, Kasugai-shi, Aichi 487-0013 (JP)
(74) Representative: Stebbing, Timothy Charles

(57) **Abstract**

An image processor for generating a histogram at high speeds under a low processing load. The image processor is used with a memory (5) and generates sub-sampling image data (D2) and histogram data (Hd) based on captured image data (D1). The captured image data includes gradation values of a plurality of pixels. The image processor includes a histogram data acquisition unit (4) connected to the memory. The histogram data acquisition unit detects pixels having the same gradation value from the captured image data (D1), designates an address in the memory that corresponds to the gradation value of the detected pixels, and adds or subtracts an arbitrary value to or from a value stored at the designated address of the memory.

## Description

This application is based upon and claims the benefit of priority from prior Japanese Patent Application No. 2005-248270, filed on August 29, 2005.

The present invention relates to an image processor, such as an image processor incorporated in a digital still camera for acquiring histogram data at high speeds.

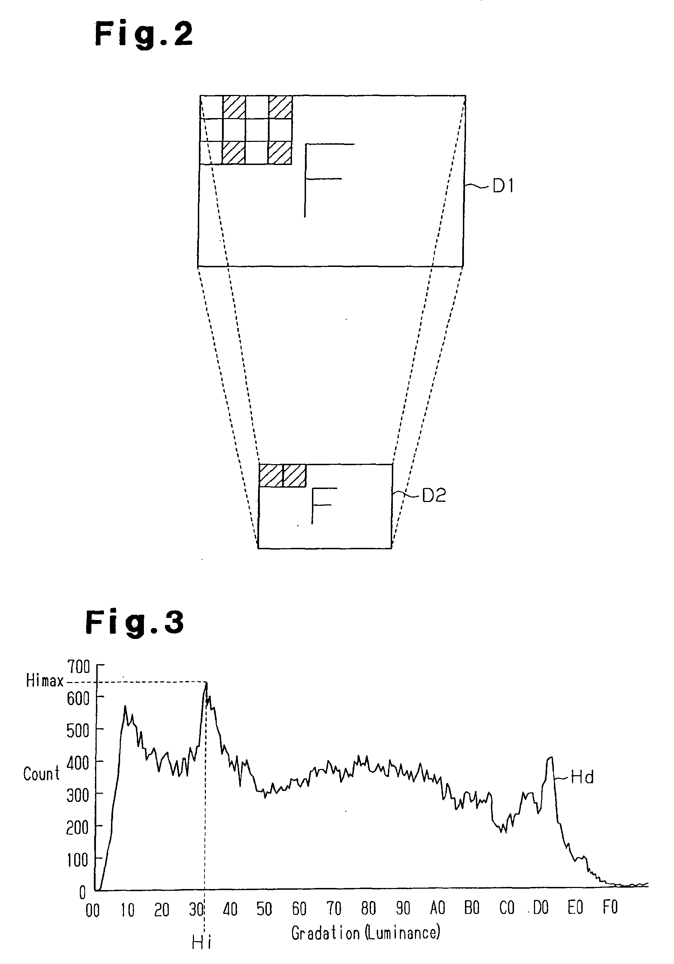

A digital still camera generates histograms, which indicate brightness distribution of an image, from the data of the image. Fig. 3 shows a histogram in which the horizontal axis represents gradation values (luminance) and the vertical axis represents counts (e.g., number of pixels) for each gradation value. A digital still camera generates a miniature image, such as a sub-sampling image, from the captured image data and shows the miniature image on the display of the digital still camera.

Japanese Laid-Open Patent Publication No. 63-207650 describes an image generation device that samples image data and uses the sampled data to carry out a gradation correction process, such as a density histogram technique.

A CPU includes a program section for storing a program. In accordance with the program, the CPU performs a count for each gradation value in the captured image data to acquire histogram data. The program for histogram processing must be stored in the program section beforehand. However, in recent years, the increase in the number of pixels for a captured image has increased the processing load applied on the CPU when acquiring the histogram data. This prolongs the time required for acquiring the histogram data.

Accordingly, it is a consideration of the present invention to provide an image processor that reduces the processing load for acquiring histogram data and increases the processing speed for acquiring a histogram.

According to a first aspect of the present invention, there is provided an image processor for generating sub-sampling image data and histogram data based on captured image data. The image processor includes a histogram data acquisition unit for generating the histogram data from the sub-sampling image data.

In an embodiment of the present invention, an alternative image processor for use with a memory and for generating sub-sampling image data and histogram data based on captured image data is provided. The captured image data includes gradation values of a plurality of pixels. The image processor includes a histogram data acquisition unit connected to the memory, for detecting pixels having the same gradation value from the captured image data, designating an address in the memory that corresponds to the gradation value of the detected pixels, and adding or subtracting an arbitrary value to or from a value stored at the designated address.

In an embodiment of the present invention, an alternative image processor for use with a memory and for generating sub-sampling image data and histogram data based on captured image data is provided. The captured image data includes gradation values of a plurality of pixels. The image processor includes a histogram data acquisition unit connected to the memory, for detecting pixels having the same gradation value from the sub-sampling image data, designating an address in the memory that corresponds to the gradation value of the detected pixels, and adding or subtracting an arbitrary value to or from a value stored at the designated address.

A detailed description of the present invention will now be given, by way of example, with reference to the accompanying drawings, in which:
Fig. 1 is a block diagram of an image processor according to a preferred embodiment of the present invention;
Fig. 2 is a schematic diagram showing the generation of sub-sampling image data;
Fig. 3 is an example of a histogram; and
Fig. 4 is an example of a histogram with accumulated histogram data.

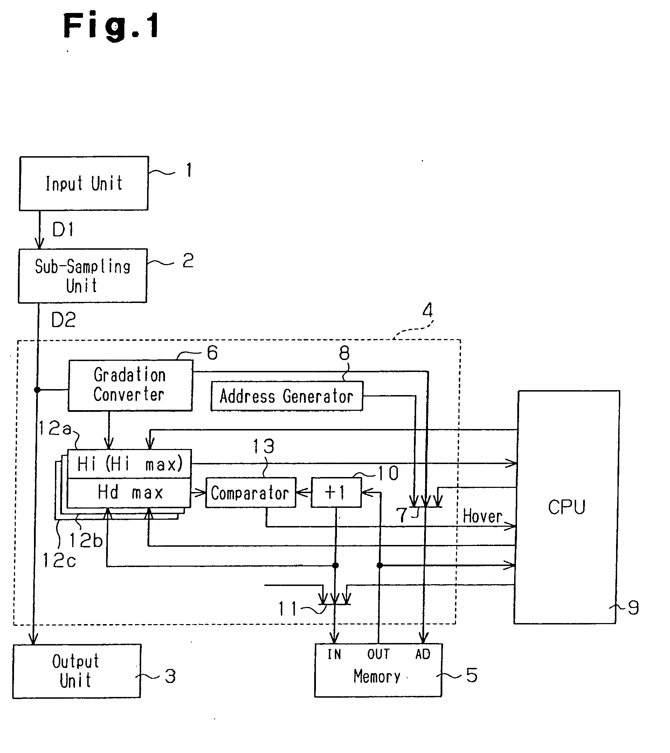

A sub-sampling image generation unit incorporated in an image processor of a digital still camera is shown in Fig. 1. Image data generated by an imaging device is provided to an input unit 1. The input unit 1 provides image data D1 to a sub-sampling unit 2.

The sub-sampling unit 2 generates sub-sampling image data D2 from the original image data D1. Referring to Fig. 2, the sub-sampling image data D2 is generated by eliminating some of the pixel information in the original image data D1. For example, image information may be eliminated so that only one out of four pixels remains. In the example shown in Fig. 2, the sub-sampling image generated from sub-sampling image data D2 is a miniature image reduced by 3/4 from an original image generated from the original image data D1.

The sub-sampling image data D2 is provided to an output unit 3 and a histogram data acquisition unit 4. The output unit 3 provides the sub-sampling image data D2 to a sub-sampling display unit (not shown). The sub-sampling image display unit displays a sub-sampling image generated from the sub-sampling image data D2.

The histogram data acquisition unit 4 detects the gradation of each pixel included in the sub-sampling image data D2, stores in a memory 5 the count for each gradation (i.e., the number of pixels for each value of gradation), and generates histogram data.

The histogram data acquisition unit 4 will now be discussed. The histogram data acquisition unit 4 includes a gradation converter 6, selectors 7 and 11, an address generator 8, an adder 10, a comparator 13, and search units 12a to 12c.

The sampling image data D2 is sequentially input to the gradation converter 6. For each pixel, the sampling image data D2 includes a gradation value having twelve bits. The gradation converter 6 truncates the four lower rank bits in the twelve bits of the gradation value. This generates a gradation value with the eight upper rank bits that is output as an address signal AD. Referring to Fig. 3, the eight bit gradation value corresponds to one of 256 gradations represented by 00 to FF in hexadecimal number format, or 0 to 255 in decimal number format.

The gradation value of each pixel, or the address signal AD, output from the gradation converter 6 is provided to the memory 5 via the selector 7.

When the memory 5 is initialized, the address generator 8 sequentially generates all of the address signals AD and provides the memory 5 via the selector 7 with the address signals AD. Further, a CPU 9, which controls the image processor, provides the address signals AD to the selector 7.

The selector 7 provides the memory 5 with a selected one of the address signals AD provided from the address generator 8, the gradation converter 6, and the CPU 9. More specifically, when the memory 5 is initialized, the selector 7 provides the memory 5 with the address signals AD output from the address generator 8. When histogram data is acquired, the selector 7 provides the memory 5 with the gradation values output from the gradation converter 6 as the address signals AD. When the CPU 9 reads the contents stored in the memory 5, the selector 7 provides the memory 5 with the address signals AD provided from the CPU 9.

During the acquisition of the histogram data, the stored data in the memory 5 is provided to the adder 10. The adder 10 adds "1" to the input stored data and provides the memory 5 via the selector 11 with the added data (i.e., the result).

Accordingly, during the acquisition of the histogram data, the adder 10 adds "1" to data OUT, which is read from the address corresponding to the gradation value output from the gradation converter 6. Then, the adder 10 re-writes the same address with the added data via the selector 11. This operation stores the count of each of the 256 gradations in the memory 5 based on the gradation values output from the gradation converter 6.

During the initialization of the memory 5, the selector 11 provides the memory 5 with, for example, the initial value of "0" or the initial value output from the CPU 9 as write data IN.

The output signal of the adder 10 is also provided to the search units 12a to 12c. The search units 12a to 12c respectively correspond to black side (dark) gradation, intermediate gradation, and white side (light) gradation. Each of the search units 12a to 12c are provided with a function for storing the gradation Hi having the highest count and the count Himax of that gradation Hi based on the output signal of the adder 10. The CPU 9 sets a tolerable maximum count Hdmax for a predetermined gradation Hi in each of the search units 12a to 12c. Then, the search units 12a to 12c hold that gradation Hi and the tolerable maximum count Hdmax.

The addition result of the adder 10 is also provided to the comparator 13. The comparator 13 compares the addition result of the adder 10 and the tolerable maximum count Hdmax. When the addition result is greater than the tolerable maximum count Hdmax, the comparator 13 provides the CPU 9 with a warning signal Hover.

The operation of the histogram data acquisition unit 4 will now be discussed.

The histogram data acquisition unit 4 initializes the memory 5 prior to the input of the sub-sampling image data D2. The histogram data acquisition unit 4 sequentially selects the addresses of the memory 5 in accordance with the address signals AD generated by the address generator 8 and sequentially writes the initial value of "0" to the selected address. This operation initializes each gradation to "0".

When the gradation value of each pixel is input to the gradation converter 6, the gradation converter 6 provides the memory 5 with an eight bit address signal AD corresponding to the gradation value. The adder 10 reads the value stored in the section (address) corresponding to the address signal AD, adds "1" to the read value, and re-writes the same address of the memory 5 with the resultant value.

This addition operation is repeated for each one of the gradation values output from the gradation converter 6. This counts the pixels included in each of the 256 gradations for the sampling image data D2.

The operation is repeated for the sub-sampling image data D2 of each frame. Then, the CPU 9 reads the addition result of each gradation to generate histogram data Hd represented by the histogram shown in Fig. 3.

The output signal of the adder 10 is input to the search units 12a to 12c. Further, the gradation Hi having the highest count and the count Himax of that gradation Hi are stored in the search units 12a to 12c. The CPU 9 reads the gradation Hi and the count Himax to perform exposure correction of the captured image.

The comparator 13 compares the addition result of the adder 10 with the predetermined tolerable maximum count Hdmax. When the addition result becomes greater than the maximum count Hdmax, the comparator 13 provides the CPU 9 with the warning signal Hover. The CPU 9 performs exposure correction based on the warning signal Hover.

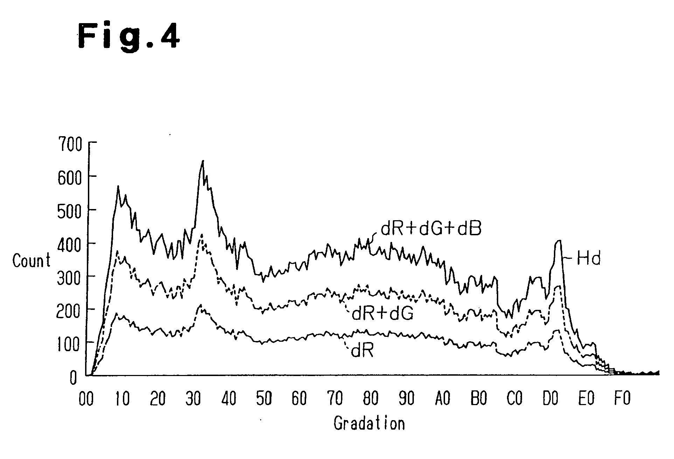

The image processor of the preferred embodiment has the advantages described below.
(1) The histogram data is acquired by the histogram data acquisition unit 4, which is hardware. This reduces the processing load on the CPU 9. Further, there is no need to store a program for acquiring the histogram data in a program section. Additionally, in comparison to when the CPU 9 performs processing, the processing speed for acquiring histogram data is increased.
(2) The histogram data is acquired from the sub-sampling image data D2. Thus, in comparison to when the histogram data is acquired from the image data D1, the processed data is reduced and the processing speed for acquiring the histogram data is increased. Further, the same histogram data may be acquired as when the histogram data is acquired from the image data D1.
(3) The histogram data acquisition unit 4 uses gradation values of the sub-sampling image data D2 as addresses of the memory 5. Whenever the same gradation value appears, the histogram data acquisition unit 4 adds "1" to the same address. Accordingly, the histogram data is acquired by reading the addition result with a simple structure.
(4) The CPU 9 can read the histogram data stored in the memory 5 and use to perform processing, such as exposure correction.
(5) The search units 12a to 12c are provided with a function for searching for the gradation having the highest count and for the count of that gradation. Thus, a search does not have to be performed on the histogram data read from the CPU 9. Further, the CPU 9 may read the contents stored in the search units 12a to 12c to obtain the gradation having the highest count and the count of that gradation. This reduces the processing load on the CPU 9.
(6) The CPU 9 designates an arbitrary gradation and its tolerable maximum count Hdmax beforehand for each of the search units 12a to 12c. When acquiring the histogram data, the search units 12a to 12c provide the CPU 9 with the warning signal Hover when the value of the address corresponding to that gradation exceeds the tolerable maximum count Hdmax. Accordingly, even when histogram data is being acquired, exposure correction may be readily performed based on the warning signal Hover.
(7) The search units 12a to 12c perform the above-described operation for the black side gradation, the intermediate gradation, and the white side gradation. This facilitates detection of the features of the image data.
(8) The gradation converter 6 converts the twelve bit gradation values of the sub-sampling image data D2 to eight bit gradation values. To generate histogram data for image data including twelve bit gradation values, the memory 5 is required to have addresses for 4096 words. However, the memory 5 needs addresses for only 256 words when performing conversion to eight bit gradation values. Accordingly, the address range of the memory 5 may be reduced.
(9) The selectors 7 and 11 can initialize the count of any gradation stored in the memory 5. Accordingly, the histogram data added in the memory 5 may be used so that the image data for a plurality of frames are accumulatively added. For example, when the image data is provided as an RGB signal, the histogram data dR, dG, dB of each frame for RGB may be accumulatively added as shown in Fig. 4 to acquire histogram data that is similar to that of Fig. 3.

It should be apparent to those skilled in the art that the present invention may be embodied in many other specific forms without departing from the scope of the invention. Particularly, it should be understood that the present invention may be embodied in the following forms.

The gradation converter 6 may convert the sub-sampling image data D2 to gradation values having any number of bits other than eight.

The gradation converter 6 may be incorporated in the sub-sampling image data D2.

The search units 12a to 12c and the comparator 13 may be eliminated.

The gradation converter 6 may be eliminated.

In the histogram data acquisition unit 4, a gradation value of the sampling image data D2 may be used as an address of the memory 5, and an arbitrary value may be added to or subtracted from the data stored at that address whenever the same gradation appears. For example, "2" may be added. Further, an arbitrary value may be subtracted as an initial value and shown in a manner inverted at the horizontal axis. This would also obtain similar histogram data.

The gradation values of the image data D1 may be used as the addresses of the memory 5, and an arbitrary value may be added to or subtracted from the data stored at that address.

The present examples and embodiments are to be considered as illustrative and not restrictive, and the invention is not to be limited to the details given herein, but may be modified within the scope of the appended claims.

## Claims

1. An image processor for generating sub-sampling image data and histogram data based on captured image data, the image processor being **characterized by**:
a histogram data acquisition unit for generating the histogram data from the sub-sampling image data.

2. An image processor for use with a memory and for generating sub-sampling image data and histogram data based on captured image data, wherein the captured image data includes gradation values of a plurality of pixels, the image processor being **characterized by**:
a histogram data acquisition unit connected to the memory, for detecting pixels having the same gradation value from the captured image data, designating an address in the memory that corresponds to the gradation value of the detected pixels, and adding or subtracting an arbitrary value to or from a value stored at the designated address.

3. The image processor according to claim 2, wherein the memory includes addresses respectively corresponding to the graduation values of the pixels, each address storing a count of the pixels having the same gradation value.

4. The image processor according to claim 3, wherein the histogram data acquisition unit includes a search unit for searching for the gradation value having the highest count and the count of said gradation value.

5. The image processor according to claim 3 or 4, wherein the histogram data acquisition unit includes:
a search unit for holding an arbitrary gradation value included in the captured image data and a tolerable maximum count of said gradation value; and
a comparator, connected to the search unit, for outputting a warning signal when a count stored in the memory exceeds the tolerable maximum count.

6. The image processor according to any one of claims 2 to 5, wherein the histogram data acquisition unit includes a gradation converter for reducing the number of bits of the gradation values included in the captured image data.

7. The image processor according to any one of claims 3 to 6, wherein the histogram data acquisition unit includes a selector for selecting and inputting to the memory one of an initial value and a value, which is obtained by accumulating counts and performing subtraction or addition.

8. An image processor for use with a memory and for generating sub-sampling image data and histogram data based on captured image data, wherein the captured image data includes gradation values of a plurality of pixels, the image processor being **characterized by**:
a histogram data acquisition unit connected to the memory, for detecting pixels having the same gradation value from the sub-sampling image data, designating an address in the memory that corresponds to the gradation value of the detected pixels, and adding or subtracting an arbitrary value to or from a value stored at the designated address.

9. The image processor according to claim 8, wherein the memory includes addresses respectively corresponding to the gradation values of the pixels, each address storing a count of the pixels having the same gradation value.

10. The image processor according to claim 9, wherein the histogram data acquisition unit includes a search unit for searching for the gradation value having the highest count and the count of said gradation value.

11. The image processor according to claim 9 or 10, wherein the histogram data acquisition unit includes:
a search unit for holding an arbitrary gradation value included in the sub-sampling image data and a tolerable maximum count of said gradation value; and
a comparator, connected to the search unit, for outputting a warning signal when a count stored in the memory exceeds the tolerable maximum count.

12. The image processor according to any one of claims 8 to 11, wherein the histogram data acquisition unit includes a gradation converter for reducing the number of bits of the gradation values included in the sub-sampling image data.

13. The image processor according to any one of claims 8 to 12, wherein the histogram data acquisition unit includes a selector for selecting and inputting to the memory one of an initial value and a value obtained by accumulating counts and performing subtraction or addition.
